# NEUE EUROPÄISCHE PATENTSCHRIFT

(11) **EP 2 188 171 B2**
(45) Veröffentlichungstag und Bekanntmachung des Hinweises auf die Entscheidung über den Einspruch: **16.09.2015**
(45) Hinweis auf die Patenterteilung: 17.08.2011
(21) Anmeldenummer: 08804106.6
(22) Anmeldetag: 12.09.2008
(51) Int. Cl.: B63B 35/00, A62C 29/00

(54) **FAHRZEUG ZUM EINBRINGEN ALKALISCHER STOFFE IN GEWÄSSER**
VEHICLE FOR INTRODUCING ALKALINE MATERIALS INTO BODIES OF WATER
VEHICULE SERVANT A INTRODUIRE DES SUBSTANCES ALCALINES DANS LES EAUX COURANTES OU STAGNANTES

(30) Priorität: 13.09.2007 DE 102007043750; 19.12.2007 DE 202007017852 U
(43) Veröffentlichungstag der Anmeldung: 26.05.2010
(73) Patentinhaber: Rheinkalk GmbH, 42489 Wülfrath (DE)
(72) Erfinder: SCHOLZ, Günter, 02977 Hoyerswerda (DE); RABE, Wolfgang, 02994 Bernsdorf (DE); PUST, Christopher, 40625 Düsseldorf (DE); SAURE, Heiko, 58285 Gevelsberg (DE)
(74) Vertreter: Cohausz & Florack
(86) Internationale Anmeldenummer: PCT/EP2008/062141
(87) Internationale Veröffentlichungsnummer: WO 2009/037194

(56) Entgegenhaltungen:
- WO-A1-99/39773
- DE-A1- 10 304 009
- DE-A1- 19 961 243
- DE-A1-102004 032 404
- DE-A1-102004 034 455
- DE-B4- 10 157 342
- DE-U1-202004 002 159
- GB-A- 191 111 131
- JP-A- 60 182 968
- SE-B- 458 604
- US-A- 1 575 134
- WEIGMANN D.L. ET AL: 'Guidelines for Liming Acidified Lakes and Ponds', September 1992 Seiten 1 - 23
- Johan Ahlström Arsrapport 2008
- Internet-Ausdruck Båtkalkning der Firma Brödema Allerts, Skövde, Schweden
- Internetauftritt (Projektbeschreibung) der Länsstyreisen Västerbotten
- Foto "Nordkalk" vom 21. aug. 07
- Flyer Rheinkalk "Neutralac®- damit sie nicht versauern"
- Rapport "Hur mår miljön i Gävleborg
- Prospekt "IMEK 5000"

## Beschreibung

Die Erfindung betrifft ein Wasserfahrzeug zum Einbringen alkalischer Stoffe in saure Gewässer zur Neutralisation und Nachsorge dieser Gewässer, insbesondere von so genannten Tagebaurestseen, die infolge ihrer Entstehungsgeschichte eine hohe Acidität aufweisen und mit dem Zustrom saurer Grundwasserströme einer lang anhaltenden Nachsorge bezüglich der Aufrechterhaltung neutraler Wasserverhältnisse bedürfen. Ferner betrifft die Erfindung eine Anordnung zum Einbringen alkalischer Stoffe in Gewässer.

Ohne eine Herstellung neutraler und wasserchemisch genehmigungsfähiger Bedingungen in solchen Gewässern ist ihre Anbindung an öffentliche Fließgewässer nicht möglich. Hinzu kommt das beim Zustrom säurebildenden Grundwassers mit der dann in Tagebaurestseen gegebenen Kontaktierung mit der Atmosphäre und den damit ablaufenden Oxidationsvorgängen, im Besonderen der Umwandlung des zwei- in dreiwertiges Eisen u. a., das Säurepotential im Gewässer weiter ansteigt und somit der See als Säuregenerator fungiert und die stromabwärts gelegenen Areale mit saurem Grund- und ggf. auch Oberflächenwasser belastet werden.

Neben einer Startneutralisation ist in den meisten Fällen daher eine sich zyklisch wiederholende Nachsorge-Behandlung für derartige Gewässer zur Aufrechterhaltung neutraler Verhältnisse notwendig.

Aus dem Stand der Technik ist bekannt, dass mittels so genannter In-Lake-Verfahren sowohl eine Startneutralisation als auch die Nachsorge derartiger Gewässer möglich ist.

In der DE 19961243 die alle Merkmale des Oberbegriffs des Anpruchs 1 offenbart, ist: beschrieben, dass mittels einer Resuspendierung von Kraftwerksaschen, die beispielsweise aus der Verbrennung von Braunkohlen stammen, mit noch vorhandener Basenkapazität die Neutralisation von sauren Tagebauseen (TBS) vollzogen werden kann. Diese Methode ist jedoch auf die Standorte beschränkt, wo derartige Reststoffe in der Nähe verfügbar sind. Ein Antransport derartiger Stoffe aus größeren Entfernungen ist aus Kostengründen nicht vertretbar.

Ein weiteres Verfahren nach Aktenzeichen DE 103 04 009.9 zielt darauf ab, mittels In-Lake-Technik alkalisch wirkende Stoffe wie z. B. Kalkhydrat (Ca(OH)₂), Branntkalk (CaO) bzw. entsprechende Dolomite oder Natronlauge mit speziellen Verteileinrichtungen derart im Gewässer zu verteilen, dass möglichst viel des eingesetzten Stoffes im See in Alkalinität umgesetzt und damit ein hoher Wirkungsgrad bei der Entsäuerung erreicht wird. Hierzu ist die Verteileinrichtung als 50m bis 2000m lange und 5 bis 40cm weite verteilrohrleitung ausgebildet, die über Auftriebskörper schwimmend im See verlegt wird. Die Kosten für ein derartiges Verfahren sind jedoch in vielen Fällen nicht vertretbar, so dass es bisher kaum zur Anwendung gelangte.

In der DE 20 2004 002 159.5 ist eine Anordnung beschrieben, welche aus einer Kombination mittels Tank-/Silofahrzeug, Zwischenlagerbehälter und einer schwimmenden mobilen Eintragsvorrichtung in Form eines auf einem Ponton schwimmenden Tanks mit einer Anzahl von Auslauföffnungen besteht, die von einem Wasserfahrzeug (Bugsierschiff) über das offene Gewässer gezogen wird. Die Verteilung der möglichen Einsatzstoffe erfolgt über spezielle Vorrichtungen auf der mobilen schwimmenden Einheit. Mit einer derartigen Lösung sind jedoch in den meisten Anwendungsfällen auch keine wirtschaftlich vertretbaren Projekte darstellbar.

Aufgabe der Erfindung ist es, eine mobile Vorrichtung zum Ausbringen alkalisch wirkender Stoffe auf sauren Gewässern, sowohl für die Startneutralisation als auch für die Nachsorge geeignet, zu schaffen, die sehr einfach aufgebaut ist, eine hohe spezifische Leistung beim Stoffausbringen im Besonderen in Verbindung mit hohen Stoffumsetzungsgraden des zum Einsatz kommenden alkalischen Einsatzstoffes gewährleistet und ohne großen Aufwand und Kosten an unterschiedlichen Orten zur Gewässerneutralisation eingesetzt werden kann.

Erfindungsgemäß wird die Aufgabe durch die Merkmale des Anspruchs 1 gelöst.

In dem erfindungsgemäßen Wasserfahrzeug sind die verschiedenen für eine Gewässerneutralisation notwendigen Komponenten, nämlich eine Ansaugvorrichtung zur Wasserentnahme aus dem See, eine Dosiervorrichtung für die Herstellung einer Suspension aus dem entnommenen Wasser und dem oder den zum Einsatz kommenden alkalischen Stoffen, Förderaggregate für die Suspension und eine Verteilvorrichtung zum Verspritzen der Suspension auf die Wasseroberfläche derart zu einer hochmobilen technischen Einheit zusammengefasst, dass für die spezifischen Bedingungen des jeweiligen Gewässers optimale Bedingungen für die höchste Wirtschaftlichkeit gegeben sind. Das Wasserfahrzeug ist so ausgeführt, dass es mit Straßentransportfahrzeugen und mittels mobiler Hilfseinrichtungen an jeder beliebigen Ufer-Stelle eines TBS einsetzbar ist. Die Bevorratung des Neutralisierungsstoffes im Wasserfahrzeug ist so gestaltet, dass sowohl feste als auch flüssige Stoffe eingesetzt werden können. Durch das oberflächige Verspritzen der Suspension über die verteilerdüse wird ein großer Aktionsradius erreicht, so dass mit einer vergleichsweise geringen Zahl von Ausbringungsfahrten eine große Gewässerfläche behandelt werden kann. Hierdurch wird eine kostenoptimale und schnelle Behandlung von sauren Gewässern mit hohem Wirkungsgrad sowohl im Rahmen einer Startneutralisation als auch einer Nachsorgebehandlung sichergestellt.

Als Alkalitätslieferanten kommen vorzugsweise Branntkalk, Branntdolomit, Kalk und Dolomitmilch, Kalkhydrat, Dolomitkalkhydrat, Natronlauge und vergleichbare Produkte zum Einsatz. Die Einmischung dieser Produkte in den Wasserstrom erfolgt vorzugsweise auf der Saugseite des Förderaggregats mittels einer Dosiervorrichtung, welche die Stoffkonzentration des jeweils eingesetzten alkalischen Stoffes in der auszubringenden Suspension exakt regelt.

Nach einer ersten Ausführungsform der Erfindung ist vorgesehen, dass das wasserfahrzeug eine Länge zwischen 5 und 15 m, vorzugsweise 8 bis 12 m, eine Breite von 2 bis 4 m, vorzugsweise 3,0 bis 3,5 m, und eine Höhe von 1,5 bis 4 m, aufweist. Hierdurch ist einerseits eine hinreichend hohe Aufnahmekapazität - bevorzugt hat der Vorratsbehälter ein Fassungsvermögen von ≥ 3 m³ - für die alkalischen Stoffe sichergestellt. Andererseits ist gewährleistet, dass das Wasserfahrzeug, sobald es auf ein entsprechendes Transportfahrzeug aufgeladen ist, auf diesem auf öffentlichen Straßen zwischen verschiedenen Einsatzorten transportiert werden kann. Hierzu beträgt das Leergewicht des Wasserfahrzeug bevorzugt maximal 20 t, vorzugsweise maximal 12 t. Die auf der Gewässeroberfläche je Flächeneinheit erforderliche Stoffkonzentration für einen ökonomisch optimalen Stoffverbrauch wird über die Fahrgeschwindigkeit des Wasserfahrzeugs, die bevorzugt im Bereich von 2 bis 30 km/h liegt, und über die in der Dosiervorrichtung eingestellte Suspensionskonzentration derart gesteuert, dass eine vollständige Stoffumsetzung im Gewässer erreicht wird. Die einzelnen Fahrzyklen des Schiffes nach Zeit und Ort richten sich dabei nach der Morphologie und den Wetterbedingungen am jeweiligen Standort.

Die Stoffkonzentration der auszubringenden Suspension kann mittels einer Regelvorrichtung entweder über eine in der Dosiervorrichtung vorgesehene Mengenregelung der zum Einsatz kommenden alkalischen Stoffe zur Saugleitung der Suspensionsförderpumpe oder über die Menge des Wassers, die aus dem See angesaugt wird, gesteuert werden.

Nach einer weiteren vorteilhaften Ausgestaltung der Erfindung ist die Ansaugöffnung der Ansaugvorrichtung an der Vorderseite des Wasserfahrzeugs vorgesehen. Diese Position in Fahrtrichtung des Schiffes ermöglicht, dass der mit der Fahrgeschwindigkeit des Schiffes entstehende Staudruck energetisch zur Förderung des Wassers für die Herstellung der Suspension genutzt wird.

Insbesondere zu Beginn der Neutralisation eines Gewässers, beispielsweise eines Tagebaurestsees, weist dieses noch einen sehr niedrigen pH-Wert auf und wirkt somit stark korrosiv. Entsprechend besteht zumindest die Außenhaut des erfindungsgemäßen Wasserfahrzeugs aus einem nichtrostenden Werkstoff, vorzugsweise einem nichtrostenden metallischen Werkstoff. Bevorzugt besteht die Außenhaut überwiegend aus Aluminium.

Für eine gleichmäßige und großflächige Ausbringung der alkalischen Suspension ist die Gestaltung und Ausrichtung der erfindungsgemäß auf dem Wasserfahrzeug vorgesehenen wenigstens einen Verteilerdüse von entscheidender Bedeutung. Nach einer weiteren vorteilhaften Ausgestaltung der Erfindung ist daher vorgesehen, dass das wasserfahrzeug zwei Verteilerdüsen aufweist und je eine der Verteilerdüsen die Suspension zu jeweils einer Seite des Wasserfahrzeugs in einem Winkel (α) von 30° bis 110° zur Fahrrichtung des Wasserfahrzeugs und gleichzeitig einem Winkel (β) von 10° bis 60° zur Wasseroberfläche ausbringt. Bevorzugt sind die Verteilerdüsen dabei derart dimensioniert und wirken derart mit der wenigstens einen Förderpumpe zusammen, dass die Suspension mit einer Austrittsgeschwindigkeit von 5 bis 50 m/s ausgebracht wird.

Neben der oberflächigen Ausbringung der alkalischen Suspension kann es auch sinnvoll sein, die Suspension direkt in tiefere Gewässerschichten, insbesondere ins Hypolimnion, einzuleiten. Hierzu weist das Wasserfahrzeug unterhalb der Wasserlinie bevorzugt wenigstens eine Verteilerdüse zum Einleiten der Suspension in tiefere Wasserschichten auf.

Die eingangs genannte Aufgabe wird ferner durch eine Anordnung zum Einbringen alkalischer Stoffe in Gewässer gelöst, wobei die Anordnung ein Wasserfahrzeug nach einem der Ansprüche 1 bis 11 sowie ein Transportfahrzeug für einen Landtransport des wasserfahrzeugs und eine Vorratseinheit für den oder die alkalischen Stoffe, von der aus das Wasserfahrzeug beladbar ist.

Als Transportfahrzeug wird bevorzugt ein Schwerlastkraftwagen eingesetzt. Die Vorratseinheit für den oder die alkalischen Stoffe ist bevorzugt als Tanklastwagen ausgebildet, so dass eine vollständige Mobilität der gesamten Anordnung gewährleistet ist.

Im Folgenden wird die Erfindung anhand ein Ausführungsbeispiel darstellenden Zeichnung näher erläutert. Es zeigen:
- Fig. 1: ein erfindungsgemäßes selbstfahrendes Wasserfahrzeug zum Einbringen alkalischer Stoffe in Gewässer in seitlicher Teilschnittansicht,

- Fig. 2: das Verspritzen einer aus dem alkalischen Stoff und Seewasser gebildeten Suspension über Verteilerdüsen des Wasserfahrzeugs aus Fig. 1 in Seitenansicht,
- Fig. 3: das Verspritzen der Suspension durch das Wasserfahrzeug aus Fig. 1 in Draufsicht,
- Fig. 4: das Wasserfahrzeug aus Fig. 1 im auf ein Transportfahrzeug aufgeladenen Zustand,
- Fig. 5: das Zuwasserlassen des Wasserfahrzeugs aus Fig. 1 und
- Fig. 6: die Befüllung des Wasserfahrzeugs aus Fig. 1 mit einem alkalischen Stoff zum Verspritzen auf der Wasseroberfläche.

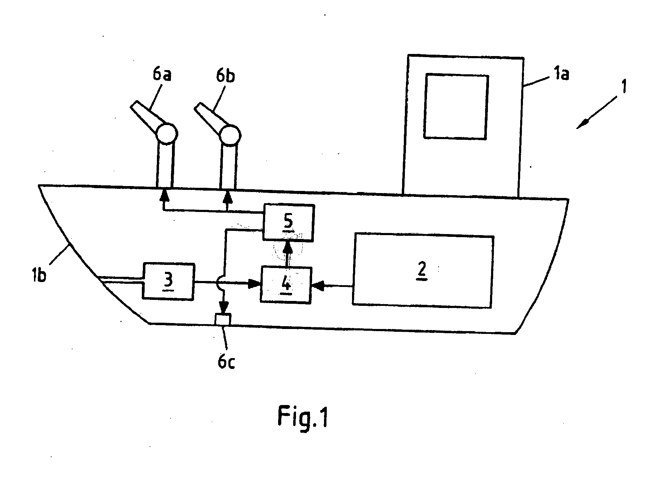

In Fig. 1 ist ein erfindungsgemäßes selbstfahrendes Wasserfahrzeug zum Einbringen alkalischer Stoffe in Gewässer dargestellt. Das Wasserfahrzeug ist vorliegend als Boot 1 ausgebildet und umfasst heckseitig einen Führerstand 1a sowie eine Antriebs- und eine Steuervorrichtung (beide nicht dargestellt). Erfindungsgemäß sind im Schiffsrumpf des Bootes 1 ein Vorratsbehälter 2 für alkalische Stoffe, eine Ansaugvorrichtung 3 für Wasser aus dem zu neutralisierenden Gewässer, eine Dosiervorrichtung 4 zur Herstellung einer Suspension aus dem angesaugten Wasser und dem im Vorratsbehälter 2 bevorrateten alkalischen Stoff und eine Förderpumpe 5 angeordnet. Die Förderpumpe 5 ist mit zwei auf dem Vorderdeck angeordneten Verteilerdüsen 6a, 6b zum Verspritzen der in der Dosiervorrichtung 4 erzeugten Suspension auf die Wasseroberfläche des zu neutralisierenden Gewässers verbunden. Vorliegend umfasst das Boot 1 ferner eine weitere Düse 6c, die im Bereich des Kiels des Bootes 1 angeordnet und in die Tiefe gerichtet ist, so dass die in der Dosiervorrichtung 4 erzeugte Suspension über die Förderpumpe 5 auch in tiefere wasserschichten eingebracht werden kann. Nicht dargestellt ist eine ebenfalls im Schiffsrumpf 1b vorgesehene Steuervorrichtung, mit welcher die Suspensionskonzentration in der Dosiervorrichtung 4 präzise eingestellt werden kann.

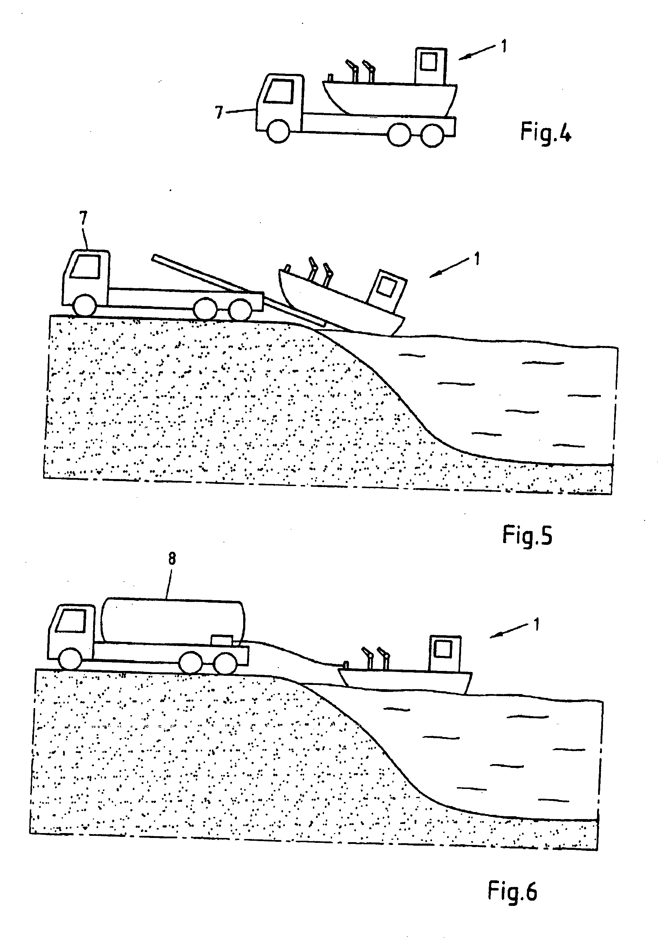

Erfindungsgemäß ist das Boot 1 hinsichtlich seiner Abmessungen und seines Leergewichtes derart dimensioniert, dass es mittels eines Transportfahrzeugs 7 (vgl. Figuren 4 und 5) über Land zu seinem jeweiligen Einsatzort transportiert werden kann. Hierzu weist das Boot 1 eine Länge von 5 - 15 m, vorzugsweise 8 - 12 Meter, eine Breite von 2 - 4 m, vorzugsweise 3 - 3,5 m und eine Höhe von 1,5 - 4 m auf. Das Leergewicht des Bootes 1 beträgt maximal 20 Tonnen, vorliegend 10 Tonnen, so dass es im aufgeladenen Zustand durch das Transportfahrzeug 7 problemlos auf öffentlichen Straßen zwischen verschiedenen Einsatzorten transportiert werden kann. Die Ladekapazität des Bootes 1 beträgt ebenfalls ca. 10 Tonnen, so dass sich im vollständig beladenen Zustand zum Beginn eines Fahrzyklus eine Gesamtmasse von 20 Tonnen ergibt. Da saure Gewässer insbesondere zu Beginn der Neutralisation korrosionsanfällige Werkstoffe stark angreifen, besteht zumindest die Außenhaut des Bootes 1 vorliegend aus einem nicht korrodierenden Werkstoff, insbesondere Aluminium.

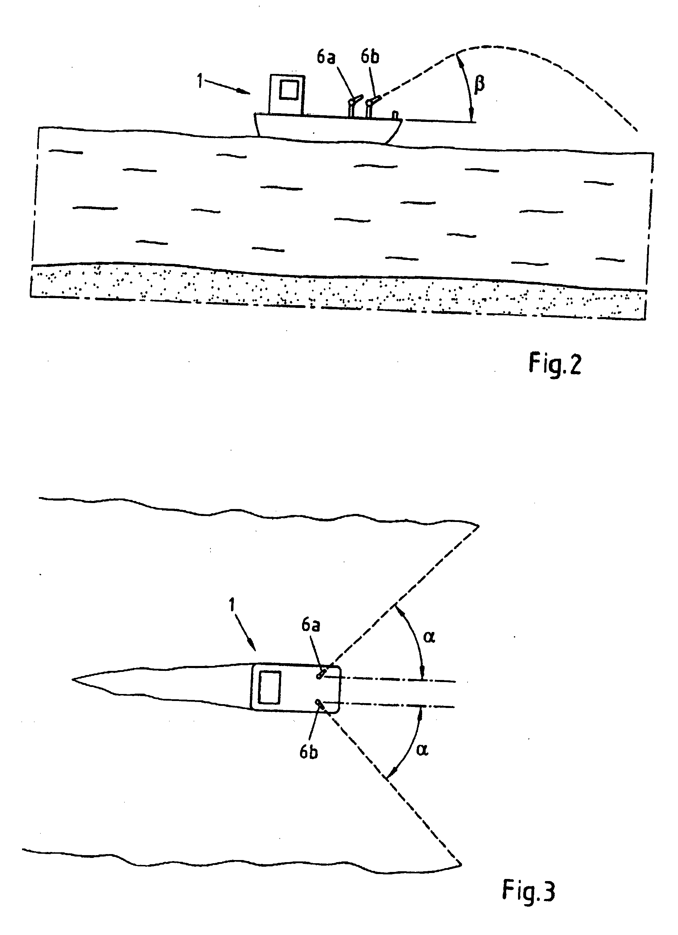

Erfindungsgemäß wird die in der Dosiervorrichtung 4 erzeugte Suspension über ein verteilerdüsensystem auf die Gewässeroberfläche ausgebracht. Dieses besteht aus einer oder mehreren starr oder beweglich im Frontbereich des Bootes 1 angeordneten Einzeldüsen. Wie bereits erwähnt, wird das Verteilerdüsensystem vorliegend durch zwei auf dem Vorderdeck angeordnete, schwenkbare Verteilerdüsen 6a, 6b gebildet. Diese sind, wie in Fig. 3 dargestellt, nebeneinander angeordnet und decken somit die Backbordseite (Düse 6a) und die Steuerbordseite (Düse 6b) des Bootes 1 ab. Nur aus Gründen der Übersichtlichkeit sind die Düsen 6a, 6b in den Seitenansichten der Figuren 1 und 2 sowie 4 - 6 jedoch hintereinander dargestellt. Vorliegend sind die Verteilerdüsen 6a, 6b sowohl in horizontaler Richtung (Winkelbereich α, vgl. Fig. 3) als auch in vertikaler Richtung (Winkelbereich β, vgl. Fig. 3) verstellbar. So können die Verteilerdüsen 6a, 6b jeweils in einen Winkel α von 30° - 110° zur Fahrtrichtung des Bootes 1 und gleichzeitig in einem Winkel β von 10° - 60° zur Wasseroberfläche eingestellt werden. Ferner sind die Verteilerdüsen 6a, 6b derart dimensioniert und wirken mit der Förderpumpe 5 in der Weise zusammen, dass die in der Dosiervorrichtung 4 erzeugte Suspension mit einer Austrittsgeschwindigkeit von 5 - 50 m/s auf die Wasseroberfläche verspritzt wird. Hierdurch wird gezielt ein Tropfenspektrum festgelegt und die Wasseroberfläche beidseitig des Bootes 1 homogen und teppichartig mit der alkalischen Suspension belegt, wie in Fig. 3 dargestellt, wobei die Breite des sich bildenden Behandlungsteppichs vorzugsweise jeweils 10 bis 80 m zu beiden Seiten des Bootes 1 beträgt.

Die auf der Gewässeroberfläche je Flächeneinheit erforderliche Stoffkonzentration für einen ökonomisch optimalen Stoffverbrauch wird über die Fahrgeschwindigkeit des Schiffes im Bereich von 2 bis 30 km/h und die in der Dosiervorrichtung 4 erzeugte Suspensionskonzentration derart gesteuert, dass eine vollständige Stoffumsetzung im Gewässer erreicht wird. Die einzelnen Fahrzyklen des Schiffes nach Zeit und Ort richten sich dabei nach der Morphologie und den Wetterbedingungen am jeweiligen Standort.

Die Stoffkonzentration der auszubringenden Suspension kann in der Dosiervorrichtung 4 mittels einer Regelvorrichtung entweder über eine Mengenregelung der zum Einsatz kommenden alkalischen Stoffe zur Saugleitung der Suspensionsförderpumpe 5 oder über die Menge des Wassers, die aus dem See angesaugt wird, gesteuert werden.

Das Prinzip der Erfindung wird nachfolgend nochmals anhand eines konkreten Beispiels erläutert.

Das erfindungsgemäße transportable Wasserfahrzeug (Boot) 1 mit einer Gesamtmasse von 20 t und einer Ladekapazität von 10 t für alkalische Stoffe bewegt sich auf einem zu behandelnden Gewässer mit einer Geschwindigkeit von 25 km/h. Über eine am Bug des Bootes 1 unter Wasser liegende Öffnung wird das zur Suspensionsherstellung erforderliche Seewasser in die Ansaugleitung der Suspensionsförderpumpe 5 mit einer Menge von 500 m³/h geleitet. In die Saugleitung der Pumpe 5 wird über eine Dosiervorrichtung 4 der aus dem Vorratsbehälter 2 des Bootes 1 geförderte alkalische Stoff mit einer Menge von 100 m³/h zudosiert, so dass eine 20 % Suspension entsteht. Diese Suspension wird der Förderpumpe 5 zugeleitet, welche die Suspension auf den für die großflächige Ausbringung erforderlichen Druck von 4 bar bringt und den Verteilerdüsen 6a, 6b über ein Rohrsystem zuführt. Die Verteilerdüsen 6a, b werfen die Suspension mit einer Düsenaustrittsgeschwindigkeit von 25 m/s links und rechts zur Fahrtrichtung des Bootes 1 mit einem Winkel α zur Fahrtrichtung von 80 Grad auf die Wasseroberfläche, so dass links und rechts neben dem Boot 1 ein jeweils 30 m breiter teppichartiger Wasserbehandlungsstreifen gebildet wird, in welchem der alkalische Stoff sofort mit dem Seewasser reagiert und vollkommen umgesetzt wird. Die mit einer so erreichten Behandlungsfläche von 125.000 m² innerhalb von 10 Min. erzielbare Stoffkonzentration an der Seeoberfläche ergibt vorzügliche Reaktionsbedingungen für einen 100% igen Stoffumsatz im zu behandelnden Gewässer. Die Stoffkonzentration des jeweils eingesetzten alkalischen Materials in der Ausgangssuspension wird über die Dosiervorrichtung 4 und ein Regelsystem den Bedingungen des Seewassers angepasst. Die einzelnen Fahrtrouten des Bootes 1 werden so gestaltet, dass unter Beachtung der Morphologie des jeweiligen Gewässers und der an der Wasseroberfläche herrschenden windinduzierten Strömungen das gesamte im Hypolimnion des Gewässers befindliche Seevolumen gleichmäßig mit alkalischem Stoff beladen wird.

Während das Boot 1 vorliegend mit Führerstand 1a ausgebildet ist, so dass ein Bootsführer den Fahrzyklus direkt steuert und überwacht, versteht es sich, dass die Fahrzyklen auch vom Ufer aus ferngesteuert beispielsweise GPS-unterstützt durchgeführt werden können.

In den Fig. 4 bis 6 ist nun eine erfindungsgemäße Anordnung zum Einbringen alkalischer Stoffe in Gewässer dargestellt. Diese umfasst ein Boot 1, wie vorstehend beschrieben, sowie ein Transportfahrzeug 7 für einen Landtransport des Boot 1 und eine Vorratseinheit 8 für den oder die alkalischer Stoffe, von der aus das Boot 1 beladbar ist. Die Vorratseinheit 8 ist vorliegend als Tanklastwagen 8 ausgebildet und somit ebenfalls mobil. In Fig. 4 ist das Boot 1 im auf das Transportfahrzeug 7 aufgeladenen Zustand dargestellt. Fig. 5 zeigt, wie das Boot 1 am Ufer eines zu neutralisierenden Gewässers, beispielsweise eines Tagebaurestsees, über eine geeignete Rampeneinheit 7a, die Bestandteil des Transportfahrzeugs 7 ist, zu Wasser gelassen wird. Das Aufladen des Bootes 1 verläuft entsprechend, beispielsweise mittels einer Seilwinde. In Fig. 6 ist nun dargestellt, wie das zu Wasser gelassene Boot 1 unmittelbar vor Beginn eines Fahrzyklus mit dem alkalischen Stoff, beispielsweise Kalkhydrat, über eine entsprechende Leitung beladen wird. Andere Arten der Beladung bei festen alkalischen Stoffen, beispielsweise über einen Kipplaster, sind ebenfalls möglich.

## Patentansprüche

1. Wasserfahrzeug (1) zum Einbringen alkalischer Stoffe in Gewässer, mit wenigstens einem Vorratsbehälter (2) für alkalische Stoffe, wenigstens einer Ansaugvorrichtung (3) für Wasser aus dem Gewässer sowie wenigstens einer Förderpumpe (5),
**dadurch gekennzeichnet, dass**
das Wasserfahrzeug (1) selbstfahrend ist und wenigstens eine Dosiervorrichtung (4) zur Herstellung einer Suspension und wenigstens eine mit der wenigstens einen Förderpumpe (5) verbundene Verteilerdüse (6a, b) zum Verspritzen der Suspension auf die Wasseroberfläche aufweist, wobei die Förderpumpe (5) derart zwischen der Dosiervorrichtung (4) und der wenigstens einen Verteilerdüse (6a, 6b) angeordnet ist, dass sie saugseitig mit der Dosiervorrichtung (4) und druckseitig mit der wenigstens einen Verteilerdüse (6a, 6b) verbunden ist, wobei das Wasserfahrzeug (1) hinsichtlich Abmessungen und Leergewicht derart dimensioniert ist, dass es mittels eines Transportfahrzeugs (7) über Land zu seinem jeweiligen Einsatzort transportierbar ist.

2. Wasserfahrzeugs (1) nach Anspruch 1,
**dadurch gekennzeichnet, dass** das wasserfahrzeug (1) eine Länge zwischen 5 und 15 m, vorzugsweise 8 bis 12 m, eine Breite von 2 bis 4 m, vorzugsweise 3,0 bis 3,5 m, und eine Höhe von 1,5 bis 4 m aufweist.

3. Wasserfahrzeug (1) nach Anspruch 1 oder 2,
**dadurch gekennzeichnet, dass** das Leergewicht des Wasserfahrzeugs (1) maximal 20 t, vorzugsweise maximal 12 t, beträgt.

4. Wasserfahrzeug (1) nach einem der Ansprüche 1 bis 3,
**dadurch gekennzeichnet, dass** der wenigstens eine Vorratsbehälter (2) ein Fassungsvermögen von ≥ 3 m³ aufweist.

5. Wasserfahrzeug (1) nach einem der Ansprüche 1 bis 4,
**dadurch gekennzeichnet, dass** die Ansaugöffnung (3) der Ansaugvorrichtung an der Vorderseite des Wasserfahrzeugs (1) vorgesehen ist.

6. Wasserfahrzeug (1) nach einem der Ansprüche 1 bis 5,
**dadurch gekennzeichnet, dass** zumindest die Außenhaut des Wasserfahrzeugs (1) aus einem nichtrostenden Werkstoff besteht.

7. Wasserfahrzeug (1) nach Anspruch 6,
**dadurch gekennzeichnet, dass** die Außenhaut überwiegend aus Aluminium besteht.

8. Wasserfahrzeug (1) nach einem der Ansprüche 1 bis 7,
**dadurch gekennzeichnet, dass** das Wasserfahrzeug (1) zwei Verteilerdüsen (6a, b)aufweist und je eine der Verteilerdüsen (6a, b) die Suspension zu jeweils einer Seite des Wasserfahrzeugs (1) in einem Winkel (α) von 30° bis 110° zur Fahrrichtung des Wasserfahrzeugs (1) und gleichzeitig einem Winkel (β) von 10° bis 60° zur Wasseroberfläche ausbringt.

9. wasserfahrzeug (1) nach einem der Ansprüche 1 bis 8,
**dadurch gekennzeichnet, dass** die wenigstens eine Verteilerdüse (6a, b) derart dimensioniert ist und derart mit der wenigstens einen Förderpumpe (5) zusammenwirkt, dass die Suspension mit einer Austrittsgeschwindigkeit von 5 bis 50 m/s ausgebracht wird.

10. Wasserfahrzeug (1) nach einem der Ansprüche 1 bis 9,
**dadurch gekennzeichnet, dass** das wasserfahrzeug (1) eine Antriebsvorrichtung umfasst, die eine Fahrgeschwindigkeit zwischen 2 und 30 km/h ermöglicht.

11. Wasserfahrzeug (1) nach einem der Ansprüche 1 bis 10,
**dadurch gekennzeichnet, dass** das Wasserfahrzeug (1) unterhalb der Wasserlinie ferner wenigstens eine Verteilerdüse (6c) zum Einleiten der Suspension in tiefere Gewässerschichten aufweist.

12. Anordnung zum Einbringen alkalischer Stoffe in Gewässer, wobei die Anordnung ein Wasserfahrzeug (1) nach einem der Ansprüche 1 bis 11 sowie ein Transportfahrzeug (7) für einen Landtransport des Wasserfahrzeug(1) und eine Vorratseinheit (8) für den oder die alkalischer Stoffe, von der aus das Wasserfahrzeug (1) beladbar ist.

13. Anordnung nach Anspruch 10,
**dadurch gekennzeichnet, dass** die Vorratseinheit als Tanklastwagen (8) ausgebildet ist.

## Claims

1. Water vehicle (1) for introducing alkaline materials into bodies of water, having at least one supply container (2) for alkaline materials, at least one intake device (3) for water from the body of water and at least one delivery pump (5), **characterised in that** the water vehicle (1) is self-propelled and has at least one metering device (4) for producing a suspension and at least one distributor nozzle (6a, b), connected to the at least one delivery pump (5), for spraying the suspension onto the water surface, wherein the delivery pump (5) is arranged between the metering device (4) and the at least one distributor nozzle (6a, 6b), such that it is connected to the metering device (4) on the suction side and to the at least one distributor nozzle (6a, 6b) on the discharge side, wherein the water vehicle (1) is dimensioned with regard to size and empty weight in such a way that it can be transported overland to its respective place of use by means of a transport vehicle (7).

2. Water vehicle (1) according to Claim 1, **characterised in that** the water vehicle (1) has a length between 5 and 15 m, preferably 8 to 12 m, a width of 2 to 4 m, preferably 3.0 to 3.5 m, and a height of 1.5 to 4 m.

3. Water vehicle (1) according to Claim 1 or 2, **characterised in that** the empty weight of the water vehicle (1) is at most 20 t, preferably at most 12 t.

4. Water vehicle (1) according to any one of Claims 1 to 3, **characterised in that** the at least one supply container (2) has a volumetric capacity of ≥ 3 m³.

5. Water vehicle (1) according to any one of Claims 1 to 4, **characterised in that** the intake opening (3) of the intake device is provided on the front of the water vehicle (1).

6. Water vehicle (1) according to any one of Claims 1 to 5, **characterised in that** at least the outer skin of the water vehicle (1) consists of a non-rusting material.

7. Water vehicle (1) according to Claim 6, **characterised in** the outer skin predominantly consists of aluminium.

8. Water vehicle (1) according to any one of Claims 1 to 7, **characterised in that** the water vehicle (1) has two distributor nozzles (6a, b) and each of the distributor nozzles (6a, b) discharges the suspension to one side of the water vehicle (1) in each case, at an angle (α) of 30° to 110° in relation to the direction of travel of the water vehicle (1) and, at the same time, at an angle (β) of 10° to 60° in relation to the surface of the water.

9. Water vehicle (1) according to any one of Claims 1 to 8, **characterised in that** the at least one distributor nozzle (6a, b) is dimensioned in such a way and interacts with the at least one delivery pump (5) in such a way that the suspension is discharged at an exit velocity of 5 to 50 m/s.

10. Water vehicle (1) according to any one of Claims 1 to 9, **characterised in that** the water vehicle (1) comprises a drive device which permits a travelling speed between 2 and 30 km/h.

11. Water vehicle (1) according to any one of Claims 1 to 10, **characterised in that** the water vehicle (1) also has at least one distributor nozzle (6c) below the water line to introduce the suspension into deeper layers of bodies of water.

12. Arrangement for introducing alkaline materials into bodies of water, wherein the arrangement has a water vehicle (1), according to any one of Claims 1 to 11, as well as a transport vehicle (7) for transporting the water vehicle (1) on land and a supply unit (8) for the alkaline material(s), from which supply unit (8) the water vehicle (1) can be loaded.

13. Arrangement according to Claim 10, **characterised in that** the supply unit is designed as a road tanker (8).

## Revendications

1. Véhicule nautique (1) pour introduire des matières alcalines dans des masses d'eau, ayant au moins un réservoir d'alimentation (2) pour les matières alcalines, au moins un dispositif d'aspiration (3) de l'eau en provenance de la masse d'eau et au moins une pompe de circulation (5), **caractérisé en ce que** le véhicule nautique (1) est autopropulsé et a au moins un dispositif de dosage (4) pour produire une suspension et au moins une buse de distribution (6a, b), connectée à ladite au moins une pompe de circulation (5) pour pulvériser la suspension à la surface de l'eau, dans lequel la pompe de circulation (5) est agencée entre le dispositif de dosage (4) et ladite au moins une buse de distribution (6a, 6b) de manière à être reliée au dispositif de dosage (4) du côté de l'aspiration et à ladite au moins une buse de distribution (6a, 6b) du côté refoulement, où le véhicule nautique (1) est dimensionné en termes de taille et de poids à vide de telle sorte qu'il puisse être transporté par voie terrestre vers son lieu respectif d'utilisation au moyen d'un véhicule de transport (7).

2. Véhicule nautique (1) selon la Revendication 1, **caractérisé en ce que** le véhicule nautique (1) a une longueur entre 5 et 15 m, de préférence 8 et 12 m, une largeur de 2 à 4 m, de préférence 3,0 à 3,5 m, et une hauteur de 1,5 à 4 m.

3. Véhicule nautique (1) selon la Revendication 1 ou 2, **caractérisé en ce que** le poids à vide du véhicule nautique (1) est au plus de 20 t, de préférence au plus de 12 t.

4. Véhicule nautique (1) selon une quelconque des Revendications 1 à 3, **caractérisé en ce que** ledit au moins un réservoir d'alimentation (2) a une capacité volumétrique ≥ 3 m³.

5. Véhicule nautique (1) selon une quelconque des Revendications 1 à 4, **caractérisé en ce que** l'ouverture d'aspiration (3) du dispositif d'aspiration est prévue à l'avant du véhicule nautique (1).

6. Véhicule nautique (1) selon une quelconque des Revendications 1 à 5, **caractérisé en ce qu'**au moins l'enveloppe externe du véhicule nautique (1) est constituée d'un matériau antirouille.

7. Véhicule nautique (1) selon la Revendication 6, **caractérisé en ce que** l'enveloppe externe est principalement constituée d'aluminium.

8. Véhicule nautique (1) selon une quelconque des Revendications 1 à 7, **caractérisé en ce que** le véhicule nautique (1) a deux buses de distribution (6a, b) et chacune des buses de distribution (6a, b) décharge la suspension vers un côté du véhicule nautique (1) dans chaque cas, à un angle (α) de 30° à 110° par rapport au sens de déplacement du véhicule nautique (1) et, en même temps, à un angle (β) de 10° à 60° par rapport à la surface de l'eau.

9. Véhicule nautique (1) selon une quelconque des Revendications 1 à 8, **caractérisé en ce que** ladite au moins une buse de distribution (6a, b) est dimensionnée de telle sorte et interagit avec ladite au moins unepompe de circulation (5) de telle sorte à ce que la suspension soit déchargée à une vitesse de sortie de 5 à 50 m/s.

10. Véhicule nautique (1) selon une quelconque des Revendications 1 à 9, **caractérisé en ce que** le véhicule nautique (1) comprend un dispositif d'entraînement qui permet une vitesse de déplacement entre 2 et 30 km/h.

11. Véhicule nautique (1) selon une quelconque des Revendications 1 à 10, **caractérisé en ce que** le véhicule nautique (1) a également au moins une buse de distribution (6c) en dessous de la ligne de flottaison afin d'introduire la suspension dans des couches plus profondes des masses d'eau.

12. Dispositif pour introduire des matières alcalines dans des masses d'eau, dans lequel le dispositif a un véhicule nautique (1), selon une quelconque des Revendications 1 à 11, ainsi qu'un véhicule de transport (7) pour transporter le véhicule nautique (1) par voie terrestre et une unité d'alimentation (8) pour la ou les matières alcalines, à partir de laquelle unité d'alimentation (8) le véhicule nautique (1) peut être chargé.

13. Dispositif selon la revendication 10, **caractérisé en ce que** l'unité d'alimentation est conçue comme un camion-citerne (8).
